(19) Europäisches Patentamt European Patent Office Office européen des brevets

(11) **EP 2 649 121 B1**

(12) **EUROPEAN PATENT SPECIFICATION**

(45) Date of publication and mention
of the grant of the patent:
**25.01.2017 Bulletin 2017/04**

(51) Int Cl.:
*C08J 11/16* [(2006.01)]     *C10G 1/06* [(2006.01)]
*C10G 1/08* [(2006.01)]

(21) Application number: **11802781.2**

(22) Date of filing: **08.12.2011**

(86) International application number:
**PCT/GB2011/052431**

(87) International publication number:
**WO 2012/076890 (14.06.2012 Gazette 2012/24)**

(54) **PLASTICS RECYCLING PROCESS**

RECYCLINGVERFAHREN FÜR KUNSTSTOFFEN

PROCÉDÉ DE RECYCLAGE DES MATIÈRES PLASTIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.12.2010 GB 201020810**

(43) Date of publication of application:
**16.10.2013 Bulletin 2013/42**

(73) Proprietor: **The University Of Manchester
Manchester M13 9PL (GB)**

(72) Inventors:
• **GARFORTH, Arthur**
  **Manchester M13 9PL (GB)**
• **MARTIN, Alastair**
  **Manchester M13 9PL (GB)**
• **AKAH, Aaron**
  **Manchester M40 3LU (GB)**

(74) Representative: **HGF Limited
1 City Walk
Leeds LS11 9DX (GB)**

(56) References cited:
**WO-A2-2010/139997     CA-A1- 2 202 941
FR-A1- 2 799 763     US-B1- 6 171 475**

• **DATABASE WPI Week 200027 Thomson
Scientific, London, GB; AN 2000-307155
XP002667981, & JP 2000 087046 A (SEIBUTSUKEI
TOKUTEI SANGYO GIJUTSU) 28 March 2000
(2000-03-28)**
• **DATABASE WPI Week 200267 Thomson
Scientific, London, GB; AN 2002-621514
XP002667982, & JP 2002 060757 A (TOSHIBA KK)
26 February 2002 (2002-02-26)**

**Description**

The present invention relates to a continuous process for the recycling of plastics materials, in particular waste plastics materials, into chemical feed stocks and hydrocarbon fractions.

Plastics waste is traditionally disposed of by land-fill, incineration or recycling by reprocessing the waste into raw material for reuse. Each of these methods has its disadvantages. The drawbacks of land-fill are self apparent. Although incineration may include energy recovery, there still remains the obvious problem of $CO_2$ emission and the emission of other toxic pollutants. Additionally, the temperatures required for incineration are high, typically of the order of 850 to 1100°C.

Recycling the plastics by conventional processes usually requires sorting of the plastics waste because certain types of plastics materials are not recyclable by conventional recycling processes, and mixtures of plastics can therefore be problematic. For example, when different types of plastics are melted together they tend to phase-separate. The phase boundaries can cause structural weakness in the resulting material and therefore limit the applications of the resulting material.

Thus there is a need for an improved and economic method for the recycling of waste plastics.

The use of zeolite based catalysts in the hydrocracking of gasoline feed stocks into gasoline is known in the petrochemical industry. Furthermore, the use of zeolite based catalysts in the recycling of waste plastics into desirable fuels such as gasoline, diesel fuel and gaseous fractions (such as propane and butane) has been considered; thermal and catalytic cracking have also been considered. Hydrocracking catalysts typically consist of a metal (hydrogenation function) supported over an acidic support (cracking function). The most used metal functions are noble metals as Pt, Pd and Ni, or bimetallic sulphides such as Co/MoS or Ni/MoS with the usual acidic supports being alumina, amorphous silica alumina (ASA) and zeolites. The balance between the acidic and metal function is critical in the performance of the catalyst. However, it is not possible to determine the optimum balance *ab initio.* One problem with this approach is that conventional zeolite catalysts have a limited lifetime and become "spent" after a period of use. The spent catalysts are less active and this is considered to be a consequence of their reduced crystallinity relative to fresh catalysts.

Hydrocracking of waste plastics has numerous drawbacks, and therefore is not presently considered to be a viable method for the disposal of waste plastics. The main problems encountered with this technique are the high temperatures required (400 to 700° C), the long reaction times required and the variability of the quality of the product. There are also significant problems caused by the presence of polyvinyl halides (such as PVC) and PET in the waste plastics supply. The rapid dehalogenation of polyvinyl halides has dramatic consequences on a conventional catalytic unit because of the production of halogenated organics and hydrogen halides. Additionally, the thermal degradation of PET produces large amounts of oligomers and terephthalic acid, which can cause damage to conventional reactors. Consequently, it is essential to pre-sort the waste stream before recycling it to remove these undesirable components. These various problems prevent continuous operation of the reactor. Conventionally, mixed waste plastics supplies must therefore first be separated to remove plastics such as PVC, e.g. by mechanical means, which in itself is a costly, time consuming process and has no guarantee of complete separation. This problem is exacerbated by the presence of PVC films on some products such as drinks bottles which makes the separation of PVC extremely difficult. Furthermore, the problem of how to dispose of plastics such as PVC still remains. An additional problem with the processing of mixed waste plastics is the variation in the resulting product streams; different waste plastics produce different product streams.

The processing of mixtures of waste plastics materials is therefore considered to be extremely problematic and, as such, catalytic hydrocracking is not considered to be a viable method of disposing of plastics waste which has not been pre-sorted.

US6171475 discloses a method for converting a polymer or oligomer derived from an ethylenically unsaturated monomer into alkanes or into a hydrocarbon fraction or a lower oligomer fraction by controlled hydrocracking, wherein the polymer or oligomer is exposed to a catalyst based on a metal hydride or an organometallic complex supported on a mineral carrier, the complex having at least one hydrocarbon ligand and optionally at least one hydride ligand, and the resulting mixture is reacted with hydrogen to cause catalytic hydrocracking of the polymer or oligomer. The polymer or oligomer is broken down into reclaimable products with a lower molecular weight for use, e.g., in the field of polymers, particularly controlled molecular weight polymers, fuels or lubricants.

CA2202941 discloses depolymerisation of thermoplastic waste by heating the thermoplastic to a temperature from about 623°K to 773°K at a low pressure for a time of at least 30 minutes in the presence of a catalyst. The depolymerisation may be conducted in the presence of hydrogen and in the presence of other hydrocarbon streams. The product is suitable to go into a petroleum refinery product stream or into a petrochemical plant as feedstock, e.g. a naphtha steam cracker for the production of ethylene and coproducts.

Accordingly, the present disclosure aims to provide a continuous process for the valorisation of waste plastics, especially mixed waste plastics, i.e. waste plastics having two or more types of plastics. Valorisation in this case means increasing the value of the waste plastics material by the treatment of waste plastics material to recover useful and economically valuable hydrocarbon fractions from the reaction. It is therefore an aim to provide a continuous process and system for extracting usable products in the form of hydrocarbon fractions and hydrocarbon products, e.g. hydrocarbon fuel products, and other valuable chemicals, from plastics waste without any need for a sorting process.

The present disclosure also aims to provide a continuous process for the valorisation of waste plastics which is tolerant of plastics such as halogenated polymers, e.g. polyvinyls including PVC, and 'acidic' polymers (e.g. PET). The present disclosure also aims to provide a continuous process for the valorisation of mixed waste plastics which include PVC and/or PET as components of the mixture. It is therefore an aim of the present disclosure to provide a continuous process and system for extracting usable hydrocarbon fuel products and other valuable chemicals from plastic waste which is tolerant to the presence of polyvinyl halides and/or PET and/or other conventionally undesirable contaminants.

The present disclosure also aims to provide a continuous process for catalytically hydrocracking waste plastics. The present disclosure also aims to provide a continuous process for hydrocracking and/or pyrolising waste plastics to a product stream comprising a distribution of lower alkyl and/or lower alkenyl compounds. The present disclosure also aims to provide a continuous process for hydrocracking and/or pyrolising waste plastics which utilises milder reaction conditions, such as a lower reaction temperature, a lower reaction pressure and/or for shorter reaction times than conventional processes. It is thus an aim to provide an economic and robust process that is widely applicable.

According to a first aspect, the present invention provides a continuous process for recycling a waste plastics material, comprising:

(i) continuously introducing into a reactor a waste plastics material as a feedstock, wherein the waste plastics material contains chlorinated plastics, wherein the reactor comprises at least one reaction chamber;

(ii) introducing the feedstock and hydrogen gas into a dechlorination reaction chamber and maintaining the dechlorination reaction chamber at a temperature ($T^1$) of from about 50 to about 300°C and a pressure ($P^1$) of up to about $1 \times 10^7$ Pa (absolute) (about 100 bar (absolute)); recovering HCl from the dechlorination reaction chamber; and separately recovering dechlorinated feedstock from the dechlorination reaction chamber;

(iii) introducing the dechlorinated feedstock from step (ii) and hydrogen into a hydrocracking reaction chamber and maintaining the hydrocracking reaction chamber at a temperature ($T^2$) of from about 50°C to about 500°C and a pressure ($P^2$) less than about $2 \times 10^7$ Pa (absolute) (about 200 bar (absolute)) and contacting the feedstock with a zeolite, silica/alumina or alumina catalyst; and

(iv) recovering hydrocracked feedstock from the hydrocracking reaction chamber;

(v) optionally reintroducing non-hydrocracked or partially hydrocracked feedstock from the hydrocracking reaction chamber into the hydrocracking reactor chamber.

The term 'recycling' means that the waste plastics material is converted into another useful product by a process comprising hydrocracking.

The term "hydrocracked feedstock" refers to products (e.g. hydrocarbon products) obtained from the process, including hydrocarbon fractions containing mixtures of hydrocarbons. The content of the recovered hydrocarbon material or hydrocarbon fractions may be determined by techniques which are conventional in the petrochemicals industry. In some embodiments, the hydrocracked feedstock will include organic products which are not hydrocarbons. In some embodiments, depending on the initial feedstock, the hydrocracked feedstock may include oxygen-containing species such as esters, acids or ethers, and/or nitrogen containing species such as amines.

The term 'waste plastics material' embraces both virgin plastics materials, such as scrap generated either during processing of the plastics materials into the desired article, or during synthesis of the plastics materials, and also the waste material (i.e. the end material which remains after the plastics product has performed its desired function). Thus the waste plastics supply may be the waste material which has originated from a domestic or commercial source, e.g. a residential or factory waste bin, or that found in a land-fill site. Of course, the waste plastics supply may be waste material from other sources.

In an embodiment, the waste plastics supply comprises a single waste plastics material that is polyvinyl chloride (PVC). It is intended that the plastics materials embrace all forms of the plastics e.g. both high and low density plastics and linear and branched forms. More advantageously, the waste plastics supply is a mixture of different plastics as described below.

In another embodiment, the waste plastics material contains chlorinated plastics and the waste plastics material comprises a mixture of two or more waste plastics materials selected from polyethylene (PE), polypropylene (PP), polystyrene (PS), polyethylene terephthalate (PET), polychloroprene, nylon, polyvinyl chloride (PVC), polyacrylonitrile (PAN) and polyurethane (PU). In a preferred embodiment, the waste plastics material contains chlorinated plastics and the waste plastics material comprises a mixture of two or more members selected from the group comprising: polyethylene (PE), polypropylene (PP), polystyrene (PS), polyethylene terephthalate (PET) and polyvinyl chloride (PVC). For example, the mixture of two or more waste plastics materials may be a mixture of: PE, PS and PVC; or PP, PS and PVC.

A particular advantage of the process of the present invention is its ability to process chlorinated plastics such as PVC. Thus, even when the waste plastics feedstock includes chlorinated plastics, such as PVC, the process may still be run effectively. Each component of the mixture of waste plastics material may be present in a wide range of proportions relative to the other components of the mixture. Adjusting the proportions of each component of the mixture can provide a useful method of tuning the product distribution.

In an embodiment, the waste plastics material may for convenience be processed i.e. pre-treated prior to introduction into the reactor for the recycling process. For example the plastics may be washed, chopped, shredded and/or powdered prior to being processed in the reactor. In an embodiment the plastics are shredded prior to being introduced into the reactor. In an embodiment the plastics are chipped prior to being introduced into the reactor. In an embodiment the plastics are not processed prior to being introduced into the reactor. If there is a mixture of plastics, sorting of the different plastics is not necessary, but this may be performed if desired to facilitate the tuning of the product distribution.

After the waste plastics material has been introduced into the reactor and before the feedstock is introduced into the dechlorination reaction chamber or the hydrocracking reaction chamber, the feedstock is first introduced into a blending chamber.

In an embodiment, the blending chamber employs heat to melt the feedstock to improve transportation of the feedstock into subsequent reaction chambers of the reactor. The heat employed to melt the feedstock may result from frictional mixing of the feedstock by one or more mixing elements contained within the blending chamber. Alternatively, the blending chamber may include a heating element, coil or surface to melt the feedstock.

In an embodiment, the waste plastics feedstock may be mixed with a viscosity modifying agent in the blending chamber. The viscosity modifying agent may be introduced into the blending chamber after the feedstock has been introduced into the blending chamber, or alternatively, the feedstock may be introduced into the blending chamber together with the viscosity modifying agent. When the feedstock is introduced into the blending chamber together with the viscosity modifying agent, further portions of a viscosity modifying agent may also be added to the blending chamber. The further portions of viscosity modifying agent may be the same as, or different from, the viscosity modifying agent previously introduced into the blending chamber. The purpose of the viscosity modifying agent is to lower the viscosity of the feedstock.

In an embodiment, the waste plastics feedstock is both melted and mixed with the viscosity modifying agent in the blending chamber.

In an embodiment, the viscosity modifying agent dissolves (e.g. partially dissolves or completely dissolves) the waste plastics feedstock. In an embodiment, the viscosity modifying agent does not completely dissolve the waste plastics feedstock and instead acts as a carrier material for the feedstock wherein the feedstock is suspended in the carrier material. The viscosity modifying agent should have a low vapour pressure at the operating conditions of the reactor. A skilled person will readily identify viscosity modifying agents having a vapour pressure suited to the conditions of the reactor. By the term "low vapour pressure" it is meant that the viscosity modifying agent has a vapour pressure which is lower than the pressure of the reactor (or individual chambers of the reactor), e.g. the vapour pressure is lower than 20%, 10%, 5%, 4%, 3%, 2% or 1% of the pressure of the reactor (or individual chambers of the reactor). Ideally, the viscosity modifying agent has a vapour pressure less than 5%, 4%, 3%, 2% or 1% of atmospheric pressure at the operating conditions of the reactor and, in particular, the operating conditions of the blending chamber. The most preferred viscosity modifying agents have a vapour pressure less than 1% of atmospheric pressure at the temperature of the blending chamber. In an embodiment, the viscosity modifying agent is a solvent. The solvent may be a single solvent or may be a mixture of suitable solvents. In an embodiment, the solvent is a liquid alkane solvent, such as a $C_5$-$C_{25}$ alkane solvent, e.g. a $C_5$, $C_6$, $C_7$, $C_8$, $C_9$, $C_{10}$, $C_{11}$ or $C_{12}$ alkane, or a $C_{13}$, $C_{14}$, $C_{15}$, $C_{16}$, $C_{17}$, $C_{18}$, $C_{19}$, $C_{20}$, $C_{21}$, $C_{22}$, $C_{23}$, $C_{24}$ or $C_{25}$ alkane, or a mixture of more than one of these, or a mixture of isomers of these. In an embodiment, the solvent is a longer chain liquid alkane solvent. The term loner chain alkane solvent' is intended to cover alkane solvents having over 10 carbon atoms. An example of a longer chain alkane solvent is squalane.

In a preferred embodiment, the viscosity modifying agent comprises or consists of partially cracked material obtained as a product of the process. This can be recovered from the hydrocracking reaction chamber or, alternatively, from a separation process such as, but not limited to, distillation. The advantage of utilising partially cracked material as the viscosity modifying agent is that the amount of raw materials required to operate the process can be reduced, the economy of the process can be improved and, thus, the environmental impact of the process will be reduced.

In an embodiment, the blending chamber comprises a means for agitating the mixture such as a screw or stirrer.

In an embodiment, the blending chamber is maintained at ambient temperature. As mentioned above, in another embodiment, the blending chamber is heated. In an embodiment, the temperature of the blending chamber is increased to above the melting point of the plastics feedstock. The blending chamber may be heated to above the melting point of some, but not all, of the waste plastics. The purpose of melting the plastics supply is to ease the transportation of the feedstock throughout the reactor. In a preferred embodiment, the blending chamber is heated to a temperature greater than or equal to 50 °C. In a preferred embodiment, the dissolution chamber is heated to a temperature between 50-200 °C. In an embodiment, the blending chamber is maintained at a pressure less than about $3\times10^6$ Pa (absolute) (about 30 bar (absolute)), e.g. from about $1\times10^5$ to about $3\times10^6$ Pa (absolute) (about 1 to about 30 bar (absolute)). Alternatively, the blending chamber may be maintained at a reduced pressure in order to remove volatile components and fumes from the chamber. In a preferred embodiment, the blending chamber is maintained at a pressure slightly below atmospheric pressure, (e.g. at a pressure of about $-1\times10^3$ Pa (gauge) (about -10 mbar (gauge)), or about $1\times10^3$ Pa (about 10 mbar) less than the prevailing atmospheric pressure.

In an embodiment, the waste plastics material feedstock is first introduced into the reactor, optionally introduced into a blending chamber and then introduced into a dechlorination reaction chamber. In some embodiments, the waste plastics feedstock may contain up to 5%, 10%, 20% or even 30% by weight of PVC. However, the process can be conducted on feedstocks containing higher percentages of PVC, eg up to 50% by weight, and in certain cases, can process PVC alone.

In an embodiment, a means is provided to transfer the feedstock from the blending chamber to the dechlorination reaction chamber. In an embodiment this means is a pump or an extruder. In a preferred embodiment the pump or extruder is a positive displacement pump or a progressing cavity pump. An example of an appropriate pump or extruder is a twin screw extruder.

In an embodiment, in addition to the feedstock, a viscosity modifying agent (as described above) is also added to the dechlorination chamber. This embodiment applies whether or not a viscosity modifying agent has previously been introduced into the reactor (e.g. in the blending chamber or otherwise). When a viscosity modifying agent has already been added to the reactor (e.g. in the blending chamber or otherwise), the further portions of viscosity modifying agent may be the same as, or different from, any viscosity modifying agent introduced into the reactor in previous steps.

It is advisable, although not essential that the dechlorination reaction chamber be purged of oxygen before introduction of the hydrogen gas (to avoid the risk of explosion).

The pressure of hydrogen in the dechlorination reaction chamber ($P^1$) is set so as to achieve appropriate hydrogen substitution after dechlorination but not so high as to result in HCl being carried forwards into the following sections of the apparatus. In an embodiment, the pressure is set by the back pressure on the HCl outlet. The dechlorination reaction must be performed in the presence of hydrogen and therefore the pressure $P^1$ must be above 0 Pa (absolute) (0 bar (absolute)).

In a preferred embodiment, the dechlorination reaction chamber is pressurised with hydrogen gas to a pressure ($P^1$) of from about $2\times10^6$ to about $7.5\times10^6$ Pa (absolute) (about 20 to about 75 bar (absolute)). In a preferred embodiment, the dechlorination reaction chamber is pressurised with hydrogen gas to a pressure ($P^1$) of from about $3.5\times10^6$ to about $6\times10^6$ Pa (absolute) (about 35 to about 60 bar (absolute)). The resulting reaction products from the dechlorination reaction chamber will be HCl and dechlorinated feedstock.

In an embodiment, the volatile components obtained from the blending chamber as a result of melting the waste plastics feedstock are both combined with and processed with the volatile components obtained from the dechlorination reaction chamber.

In an embodiment, the HCl is recovered. In an embodiment, the HCl may be anhydrous and condensed from high pressure to give anhydrous HCl. In an embodiment, the HCl may be trapped in water to form an aqueous solution. This product may be a saturated HCl solution (36 wt% HCl). In an embodiment, the HCl contains trace amounts of hydrocarbons, this product is known as co-product HCl by those skilled in the art. Co-product HCl is a valuable product in itself.

In a preferred embodiment, the dechlorination reaction chamber is heated to a temperature, $T^1$, of from about 150 to about 250°C. In a preferred embodiment, the dechlorination reaction chamber is heated to a temperature, $T^1$, of from about 190 to about 210 °C.

In an embodiment, the feedstock has a residence time, $t^1$, in the dechlorination reaction chamber of less than about 3 hours, e.g. from about 1 minute to about 3 hours. Preferably, the feedstock has a residence time, $t^1$, in the dechlorination reaction chamber of less than about 30 minutes. Typically, the dechlorination reaction can be completed in about 15 minutes or less, or even in as short a time as about 10 minutes or less. The shortest possible time that the feedstock is resident in the dechlorination reaction chamber will be the time taken for the feedstock to be transported from the inlet to the outlet of the dechlorination reaction chamber. The residence time would be dependent on the volume of the reactor and the rate at which the reactor is loaded with waste plastics material. The dechlorinated feedstock may in some cases still contain some chlorinated plastics material though in practice this will be a relatively small amount and will not impede conduct of the remainder of the process. Thus, for example, up to 1%, 5% or even 10% by weight of chlorinated material may still be present in the dechlorinated material, dependent on the original feedstock content.

In an embodiment, there is provided a means to transfer the dechlorinated feedstock from the dechlorination chamber to the hydrocracking reaction chamber. In an embodiment this means is a pump or an extruder. In a preferred embodiment the pump or extruder is a positive displacement pump or a progressing cavity pump. An example of an appropriate pump or extruder is a twin screw extruder.

The hydrocracking reaction chamber is under pressure of hydrogen gas ($P^2$). It is therefore advisable, although not essential that the reactor be purged of oxygen before introduction of the hydrogen gas (to avoid the risk of explosion).

In an embodiment, the hydrocracking reaction chamber is pressurised with hydrogen gas to less than about $1 \times 10^7$ Pa (absolute) (about 100 bar (absolute)). In a preferred embodiment, the hydrocracking reaction chamber is pressurised with hydrogen gas to less than about $7.5 \times 10^6$ Pa (absolute) (about 75 bar (absolute)). In a preferred embodiment, the hydrocracking reaction chamber is pressurised with hydrogen gas to a pressure of from about $3.5 \times 10^6$ to about $6 \times 10^6$ Pa (absolute) (about 35 to about 60 bar (absolute)).

Preferably the hydrocracking reaction chamber is maintained at a temperature, $T^2$, of from about 150°C to about 400°C. More preferably the hydrocracking reaction chamber is maintained at a temperature, $T^2$, of from about 250°C to about 400°C. For example, the hydrocracking reaction chamber may be maintained at a temperature, $T^2$, of about 150°C, 160°C, 170°C, 180°C, 190°C, 200°C, 210°C, 220°C, 230°C, 240°C or 250°C. Of course, the hydrocracking reaction chamber may be maintained at a higher temperature, $T^2$, of about 260°C, 270°C, 280°C, 290°C, 300°C, 310°C, 320°C, 330°C, 340°C, 350°C, 360°C, 370°C, 380°C, 390°C, 400°C, 410°C, 420°C, 430°C, 440°C or 450°C. Yet more preferably, the hydrocracking reaction chamber is at a temperature, $T^2$, of from about 300 °C to about 370°C. In an embodiment, the hydrocracking reaction chamber is at a temperature, $T^2$, of about 220°C, e.g. of from about 180 °C to about 250 °C. In an embodiment, the hydrocracking reaction chamber is at a temperature, $T^2$, of about 350°C, e.g. of from about 330 °C to about 370°C. In an embodiment, the hydrocracking reaction chamber is at a temperature, $T^2$, of about 400°C, e.g. of from about 380°C to about 420°C.

In an embodiment the dechlorination reaction chamber operates at a lower temperature than the hydrocracking reaction chamber.

In an embodiment, the chlorinated feedstock from step (ii) has a residence time, $t^2$, in the hydrocracking reaction chamber of up to about 3 hours. Preferably, the feedstock has a residence time, $t^2$, in the hydrocracking reaction chamber of up to about 30 minutes. Typically the hydrocracking reaction can be completed in about 15 minutes or less, or even in as short a time as about 10 minutes or less. The shortest possible time that the feedstock is resident in the hydrocracking reaction chamber will be the time taken for the feedstock to be transported from the inlet to the outlet of the hydrocracking reaction chamber. The residence time would be dependent on the volume of the reactor and the rate at which the reactor is loaded with feedstock. One important feature of the present invention is that the reactions can be performed in a relatively short period of time. This represents a considerable advantage in terms of energy reduction on the one hand and increasing the volume of material that can be processed in a given time.

In an embodiment, the catalyst is a zeolite catalyst. Suitable zeolite catalysts are discussed below. Examples of suitable zeolite catalysts that may be used in the process according to the present invention, and processes for their manufacture, are described in PCT/GB2010/050932. The contents of this disclosure insofar as it relates to suitable zeolite catalysts and methods of their production are specifically incorporated into this disclosure by reference and are intended to form part of this disclosure and may form part of the working of this invention in some embodiments.

The modified zeolite catalysts that may be used in the present invention are obtained from existing zeolite catalysts by a process that includes steps which ordinarily might be considered as leading to deactivation of the zeolite catalyst. In this regard the catalysts would normally be considered to be "spent" and incapable of further use.

According to an embodiment, the modified zeolite catalyst used in the process of the invention is one which has been made using a method comprising:

(i) obtaining a commercially available zeolite Y catalyst having a $Na_2O$ content of from 2.0 to 4.0%;
(ii) optionally subjecting the zeolite to an ion-exchange process, wherein the ion-exchange process comprises admixing the zeolite with an ammonium salt solution at between 50 and 85°C for between 10 and 60 minutes;
(iii) subjecting the zeolite of step (i) or step (ii) to an ion-exchange process, wherein the ion-exchange process comprises admixing the zeolite with an ammonium salt solution at between 60 and 100°C for between 60 and 240 minutes;
(iv) steam calcining the zeolite from step (iii) at between 450 and 800°C for between 10 minutes and 60 minutes;
(v) subjecting the zeolite of step (iv) to an ion-exchange process, wherein the ion-exchange process comprises admixing the zeolite of step (iv) with an ammonium salt solution at between 50 and 95°C for between 10 and 120 minutes; and
(vi) optionally subjecting the zeolite of step (v) to an ion-exchange process, wherein the ion-exchange process comprises admixing the zeolite of step (v) with a transition metal salt solution.

According to another embodiment, the zeolite catalyst comprises: a zeolite having a sodium oxide content of 0.1% or less; and optionally comprising a transition metal.

In an embodiment, the zeolite catalyst has a final unit cell dimension of 24.3 - 24.7 Å. In an embodiment, the zeolite catalyst has a Si/Al ratio of 1.5 - 3. In an embodiment, the zeolite catalyst has a surface area of 400 - 900 $m^2g^{-1}$, preferably 650 - 850 $m^2g^{-1}$. In an embodiment, the zeolite catalyst has a crystallinity of 60 - 100%, preferably 70 - 90%. In an embodiment, the zeolite catalyst has a $Na_2O$ content of 0.05 - 0.6%, preferably 0.05 - 0.35% by weight of the dried bulk.

The following table provides typical values of samples of the zeolite catalyst:

| Sample | Na$_2$O content/% (Dried Bulk) | Unit cell size/Å | Crystallinity/% | Surface area/m$^2$g$^{-1}$ |
|--------|-------------------------------|------------------|-----------------|-----------------------------|
| A | 0.32 | 24.54 | 83 | 798 |
| B | 0.10 | 24.52 | 80 | 780 |
| C | 0.10 | 24.53 | 83 | 772 |
| D | 0.07 | 24.45 | 70 | 729 |
| E | 0.07 | 24.39 | 70 | 681 |

In an embodiment, the commercially available zeolite Y of step (i) of the method of making the zeolite catalyst has a Na$_2$O concentration of 2.0 to 3.5%, preferably 2.0 to 3.0% and more preferably around 2.5% (% of dried bulk).
In an embodiment, the ammonium salt solution is an aqueous solution of an ammonium salt for any one or all of step (ii), step (iii) and step (v). In an embodiment, the ammonium salt when used to ion-exchange the zeolite catalyst is independently selected from the group comprising: ammonium chloride, ammonium sulphate and ammonium nitrate. The skilled person will be aware of other ammonium salts that would be suitable in the method of the present invention. The ammonium salt used in step (ii), step (iii) and step (v) may be the same or different. Preferably, step (ii), step (iii) and step (v) use the same ammonium salt.
In an embodiment, step (ii) of the method of making the zeolite catalyst is mandatory. In general terms, step (ii) of the method of making the zeolite catalyst is a mild ammonium ion exchange. The skilled person would understand what is meant by the term 'mild ammonium ion exchange' and be able to determine suitable reaction conditions. In an embodiment, step (ii) of the method of making the zeolite catalyst comprises subjecting the zeolite to an ion-exchange process, wherein the ion-exchange process comprises admixing the zeolite with an ammonium salt solution at between 55 and 80°C, preferably 60 and 75°C and more preferably 65 and 70°C. In an embodiment, the ion-exchange process comprises admixing the zeolite with an ammonium salt solution at around 70°C.
In an embodiment, step (ii) of the method of making the zeolite catalyst comprises subjecting the zeolite to an ion-exchange process, wherein the ion-exchange process comprises admixing the zeolite with an ammonium salt solution for between 15 minutes and 50 minutes, preferably 20 minutes and 45 minutes, more preferably 25 minutes and 40 minutes and yet more preferably 30 minutes and 35 minutes. In an embodiment, the ion-exchange process comprises admixing the zeolite with an ammonium salt solution for 30 minutes.
In general terms, step (iii) of the method of making the zeolite catalyst is a severe ammonium ion exchange. The skilled person would understand what is meant by the term 'severe ammonium ion exchange' and be able to determine suitable reaction conditions. In an embodiment, step (iii) of the method of making the zeolite catalyst comprises subjecting the zeolite to an ion-exchange process, wherein the ion-exchange process comprises admixing the zeolite with an ammonium salt solution at between 70 and 100°C, preferably 80 and 100°C and more preferably 90 and 100°C. In an embodiment, the ion-exchange process comprises admixing the zeolite with an ammonium salt solution at around 95°C ± 2°C.
In an embodiment, step (iii) of the method of making the zeolite catalyst comprises subjecting the zeolite to an ion-exchange process, wherein the ion-exchange process comprises admixing the zeolite with an ammonium salt solution for between 1.5 hours and 4 hours, preferably 2 hours and 3.5 hours and more preferably 2.5 hours and 3.5 hours. In an embodiment, step (iii) comprises subjecting the zeolite to an ion-exchange process, wherein the ion-exchange process comprises admixing the zeolite with an ammonium salt solution for around 3 hours.
In an embodiment, step (ii) of the method of making the zeolite catalyst is omitted and step (iii) follows step (i). In this case, the mild ion exchange in embraced within the severe ion exchange of step (iii).
In an embodiment, step (iv) of the method of making the zeolite catalyst comprises steam calcining the zeolite from step (iii) at between 450 and 600°C, preferably 470 and 570°C and more preferably 500 and 540°C. In an embodiment, step (iv) comprises calcining the zeolite from step (iii) at 520°C.
In an embodiment, step (iv) of the method of making the zeolite catalyst comprises steam calcining the zeolite from step (iii) at between 500 and 700°C, preferably 550 and 650°C and more preferably 580 and 620°C. In an embodiment, step (iv) comprises calcining the zeolite from step (iii) at 600°C.
In an embodiment, step (iv) of the method of making the zeolite catalyst comprises steam calcining the zeolite from step (iii) at between 600 and 800°C, preferably 650 and 750°C and more preferably 680 and 730°C. In an embodiment, step (iv) comprises calcining the zeolite from step (iii) at 710°C.
In an embodiment, step (iv) of the method of making the zeolite catalyst comprises steam calcining the zeolite from step (iii) for between 15 minutes and 50 minutes, preferably 20 minutes and 45 minutes, more preferably 25 minutes and 40 minutes and yet more preferably 30 minutes and 35 minutes. In an embodiment, step (iv) of the method comprises steam calcining the zeolite from step (iii) for 30 minutes.

In an embodiment, step (v) of the method of making the zeolite catalyst comprises subjecting the zeolite to an ion-exchange process, wherein the ion-exchange process comprises admixing the zeolite with an ammonium salt solution at between 60 and 95°C, preferably 65 and 90°C and more preferably 70 and 90°C. In an embodiment, step (v) comprises subjecting the zeolite to an ion-exchange process, wherein the ion-exchange process comprises admixing the zeolite with an ammonium salt solution at around 80°C $\pm$ 2°C.

In an embodiment, step (v) of the method of making the zeolite catalyst comprises subjecting the zeolite to an ion-exchange process, wherein the ion-exchange process comprises admixing the zeolite with an ammonium salt solution for between 20 minutes and 90 minutes, preferably 30 minutes and 90 minutes and more preferably 45 minutes and 75. In an embodiment, step (v) of the method comprises subjecting the zeolite to an ion-exchange process, wherein the ion-exchange process comprises admixing the zeolite with an ammonium salt solution for around 1 hour.

In an alternative embodiment, step (vi) of the method of making the zeolite catalyst is mandatory. In this embodiment, the method of making the zeolite catalyst provides a catalyst suitable for hydrocracking reactions as mentioned above. In an embodiment, step (vi) comprises treating the zeolite of step (v) with a solution of a transition metal salt. In an embodiment step (vi) comprising stirring the zeolite from step (v) in a solution of transition metal salt at around room temperature for between 1 hour and 48 hours, preferably 24 hours.

In an embodiment, the zeolite is produced by first reducing the $Na_2O$ level by performing a mild ion-exchange process, followed by a more severe ion-exchange process and then performing a steam calcination step. The final level of $Na_2O$ can be tuned according to the severity of the final steam calcination step; the more severe the calcination, the lower the $Na_2O$ content. Finally, the steam calcined zeolite is further ion-exchanged.

By way of example, the zeolite catalyst may be prepared by the following method:

(i) provide a zeolite having a $Na_2O$ content of approximately 2.5%;
(ii) perform a mild ammonium ion-exchange (pH 8, 70°C, 30 mins). The resulting zeolite has a $Na_2O$ content of approximately 0.57%;
(iii) perform severe ammonium ion-exchange (pH 8, 95°C, 3 hrs). The resulting zeolite has a $Na_2O$ content of approximately 0.1%;
(iv) perform a steam calcination step: mild (520°C, 30 mins), medium (600°C, 30 mins), severe (710°C, 30 mins). The resulting zeolites have a $Na_2O$ content of 0.1 %, 0.07% and 0.07% respectively;
(v) perform a further ammonium ion-exchange (pH 8, 80°C, 1 hr). The resulting zeolite has a $Na_2O$ content of approximately 0.1 %, 0.07% and 0.07% respectively.

In an embodiment, the modified zeolite catalyst is a metal loaded zeolite catalyst and comprises a catalytic metal. The zeolite catalyst is first modified by the ion exchange and calcining processes described above and then loaded with a catalytic metal in a subsequent step. The catalyst is loaded with a metal by treatment with, for example, an aqueous solution of the metal salt. In such a case, the metal of the metal loaded catalyst is able to catalyse the hydrocracking of a waste plastics supply in the presence of hydrogen gas. In this case, the zeolite acts as a support for the metal.

In an embodiment, the catalytic metal of the zeolite catalyst is a group VIIIb transition metal, i.e. a transition metal selected from the group comprising: Fe, Ru, Os, Co, Rh, Ir, Ni, Pd and Pt. The transition metal catalyst is preferably selected from the group comprising: platinum, palladium, nickel and iridium. More preferably, the transition metal is selected from the group comprising: platinum and nickel; most preferably the metal is platinum.

The quantity of metal catalyst in relation to the zeolite can vary considerably. For example, the zeolite catalyst may comprise from 0.1 % to 75% transition metal catalyst by weight. This figure of course depends on which transition metal catalyst is selected. For example, if the transition metal catalyst is a platinum catalyst, the amount of catalyst may be between 0.1 and 10%, and more normally is between 0.1 and 5%, preferably 1% $\pm$ 0.2%, by weight of the zeolite catalyst. Alternatively, if the transition metal catalyst is a nickel catalyst, the amount of catalyst may be between 10 and 75%, preferably 60% $\pm$ 2%, by weight of the zeolite catalyst.

In an embodiment, the zeolite catalyst has a $Na_2O$ content of less than 0.15%, preferably 0.1 % or less, $\pm$ 0.01 %. The reduction in $Na_2O$ content means that the zeolite catalyst also has a concomitant reduction in unit cell size. Thus ammonium ion exchange and calcination each independently reduce both the unit cell size and the $Na_2O$ content. The balance of $Al^{3+}$ in the framework versus extra framework $Al^{3+}$ is important in controlling the overall acidity of the catalyst. The balance of this is manipulated here by using various steaming regimes.

It is possible that other known low $Na_2O$ content zeolites may also have application in the present invention. The invention thus extends to the use of such zeolites.

In an embodiment, the zeolite catalyst comprises a modified zeolite, in which the zeolite has been ion-exchanged and calcined and is used as a support for a catalytic metal. However, catalyst supports other than zeolites may also be used in the present invention. In general terms, other suitable supports would include divided solids comprising a metal oxide or a mixture of metal oxides such as, for example, silica/alumina, silica, alumina, mesoporous oxides and natural clays.

It is known in the art that steam calcination can be used to deliberately deactivate zeolite catalysts. Thus, the zeolite catalysts resulting from the final steam calcination are similar in structure and properties to spent zeolite catalysts. However, it has surprisingly been found that by performing an additional ammonium ion exchange step, an extremely useful zeolite catalyst can be produced from waste i.e. spent catalysts: a catalyst of the present invention. Furthermore, a yet further surprising discovery is that by ion exchanging this ammonium ion exchanged catalyst with a target catalytic metal ion, an extremely useful metal loaded zeolite catalyst can be obtained.

The continuous process of the invention also has the advantage that it can use a wider range of catalysts than a simple batch process. Thus, catalysts which have been shown to be ineffective in a batch process may be employed successfully in the continuous process of the invention. In an embodiment, the zeolite catalyst is one which has been found not suitable for batch processes. Such a catalyst might ordinarily be regarded as being a deactivated catalyst.

In an embodiment, the light hydrocarbons obtained from the hydrocracking reaction chamber (e.g. $CH_4$, $C_2H_6$ and other alkanes of $C_4$ or $C_6$ or less and mixtures thereof) and excess $H_2$ can be reintroduced into the dechlorination reaction chamber to act as a hydrogen source for the dechlorination reaction. This reintroduction may be done together with or separately from any hydrogen that is supplied to the dechlorination reaction chamber.

In some embodiments, depending on the initial feedstock, the hydrocarbon materials or hydrocarbon fractions may also include oxygen-containing species such as esters, acids or ethers, and/or nitrogen containing species such as amines.

In an embodiment, a concentrated slurry made up of materials from the hydrocracking reaction chamber is introduced into a separation chamber or series of separation chambers. This separation chamber separates the concentrated slurry into two or more components, including: HP naphtha; MP liquid naphtha; MP gasoline; aqueous organic acids; gasoline; diesel esters; and/or solid materials (which may include, but are not limited to labels, pigments and fillers, e.g. $TiO_2$, $CaCO_3$) derived from the hydrocracking feedstock stream. The solid material may also include catalyst. The apparatus and methods used to separate the components are conventional and will be familiar to those skilled in the art.

In an embodiment, the partially cracked viscosity modifying agents (low in solids) are reintroduced into the blending, dechlorination chamber and/or hydrocracking chamber. The advantage of reusing partially cracked feedstock as the viscosity modifying agents is that the amount of raw material required to operate the process can be reduced.

In an embodiment, the component which is high in solids is reintroduced into the hydrocracking reaction chamber along with dechlorinated feedstock from the dechlorination reaction chamber. This allows the further recovery and hydrocracking of heavy hydrocarbon material.

In an embodiment, the catalyst is a "travelling bed catalyst". Thus, the solid material resulting from the hydrocracking process will also contain the catalyst in a particulate or suspension form. This mixture, or a proportion of this mixture, is reintroduced into the hydrocracking reaction chamber whereby the catalyst is used in the hydrocracking process.

Should the amount of catalyst present in the hydrocracking reaction chamber decrease through losses of the catalyst during operation of the process, additional catalytic material can be introduced into the reaction through a suitable inlet port.

Pressures are quoted with an accuracy of $\pm$ 2x10$^5$ Pa ($\pm$2 bar). Similarly, temperatures are measured with an accuracy of $\pm$10 °C.

The apparatus employed in the process of the present invention may be purged with an inert gas prior to starting the reaction process. The purpose of purging the apparatus with an inert gas prior to starting the reaction process is to suppress combustion of the feedstock by removing any oxygen from the system which prevents oxidation of the plastics waste and prevents the risk of explosion. The apparatus may be purged once, twice or even three times prior to starting the reaction. Thus the reactor may be purged by systematic purging (i.e. filling the apparatus with inert gas and emptying the apparatus several times). Once the apparatus has been purged with an inert gas, it is preferable to purge the apparatus with hydrogen. Alternatively the apparatus can be purged with hydrogen without having previously purged with an inert gas. Although purging of the reaction is recommended, it is not an essential step of the invention.

The term 'inert gas' is intended to include any gas which is able to displace oxygen gas. Suitable gases include nitrogen, carbon dioxide, the noble gases e.g. argon and krypton, and halogenated hydrocarbon gases. Alternatively, any gas which can be used to remove or reduce the amount of oxygen in the apparatus may be used as this otherwise presents a combustion hazard.

According to a second aspect, the present invention provides apparatus for a continuous process for recycling a waste plastics material, comprising:

    i) a dechlorination reaction chamber;
    ii) a means to transport a waste plastics material feedstock into the dechlorination reaction chamber;

iii) a means for stripping HCl from the gases arising from the dechlorination reaction chamber;

iv) means for introducing hydrogen gas into the dechlorination reaction chamber;

v) a hydrocracking reaction chamber;

vi) a means to transport dechlorinated feedstock from the dechlorination reaction chamber to the hydrocracking reaction chamber; and

vii) means for introducing hydrogen gas into the hydrocracking reaction chamber.

In an embodiment, the apparatus also comprises a blending chamber and the means to transport the waste plastics material feedstock into the dechlorination reaction chamber transports the feedstock from the blending chamber to the dechlorination reaction chamber. In an embodiment, the blending chamber is fitted with an agitator.

In an embodiment, the means to transport feedstock into the dechlorination reaction chamber is a pump. In an embodiment, the pump is a progressing cavity pump. In an alternative embodiment the pump is a positive displacement pump. In an embodiment, the positive displacement pump or progressing cavity pump is a twinscrew extruder pump.

In an embodiment, the means to transport feedstock from the dechlorination reaction chamber to the hydrocracking reaction chamber is a pump. In an embodiment, the pump is a cavity pump. In an alternative embodiment the pump is a positive displacement pump. In an embodiment, the positive displacement pump or cavity pump is a twin-screw extruded pump.

In an embodiment the means to transport feedstock into the dechlorination reaction chamber operates at a lower pressure than the means to transport feedstock from the dechlorination reaction chamber to the hydrocracking reaction chamber.

In an embodiment the hydrocracking reaction chamber is fitted with a means to agitate the mixture.

In an embodiment the apparatus also comprises a separation chamber or a series of separation chambers.

The process of the invention is will be understood when read in conjunction with the following figures in which:

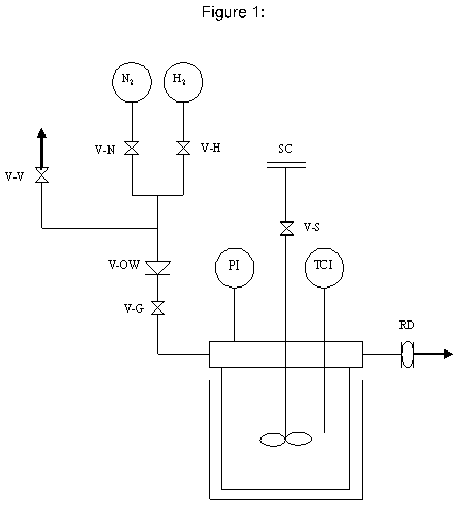

Figure 1 illustrates an example of an autoclave setup for a batch reactor. The following key is used:

| | |
|---|---|
| V-N | = N$_2$ line valve |
| V-H | = H$_2$ line valve |
| V-G | = Autoclave gas valve |
| V-V | = Venting valve |
| V-S | = Sampling valve |
| V-OW | = One way valve |
| SC | = Gas sampling connection |
| RD | = Bursting disc |
| PI | = Pressure Gauge |
| TCI | = Temperature controller and indicator |

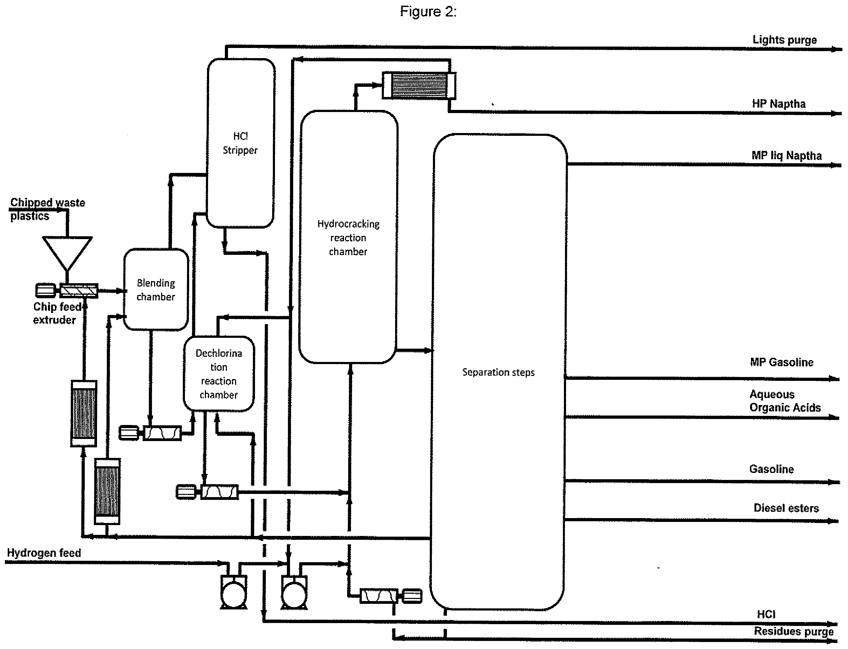

Figure 2 illustrates an example of a continuous waste plastics recycling apparatus that can be employed in the process of the present invention.

Figure 3 illustrates the GC trace for gas sample at 300°C.

Figure 4 illustrates the GC trace for gas sample at 375°C.

Figure 5 illustrates an example of a continuous waste plastics recycling apparatus that can be employed in the process of the present invention.

The apparatus shown schematically in Figure 1 illustrates the basic elements of the reactor apparatus as a whole that are required to operate the process. The position of individual components such as the blending chamber, the HCl stripper, dechlorination reaction chamber and hydrocracking reaction chamber may be varied to suit particular operational requirements. Equally, the blending chamber may be considered as optional items depending on the waste streams being processed. Such departures from the actual apparatus of Figure 1 are well within the contemplation and capabilities of the skilled person once provided with the basic elements of the original apparatus shown in Figure 1.

The present invention is illustrated by way of the following examples. These examples are not intended to be limiting to the scope of the present invention.

**Example 1 - preparation of the bare zeolite catalyst (excluding metal)**

This example illustrates a procedure for the manufacture of three zeolite catalysts of the present invention. The Na$_2$O contents of the catalysts and intermediates are recited. The initial zeolite catalyst having a Na$_2$O content of 2.5% is commercially available.

211 213 215

## Example 2 - loading of transition metal by ion exchange

This example illustrates the procedure for the loading of the transition metal to the zeolites produced from Example 1.

The catalysts were loaded with Pt by ion exchange with an aqueous solution of $Pt(NH_3)_4Cl_2$ salt purchased from Sigma-Aldrich. About 10 g of zeolite was mixed with 1000 mL of 0.001 M Pt solution and the slurry was then stirred at room temperature for 24 h. The concentration of the solution was calculated from the required level of loading, assuming complete uptake of platinum by the zeolite and a ratio of 100 mL of solution per gram of zeolite exchanged. The Pt loaded zeolite was then filtered off and washed with deionised water to remove chloride ions. About 6 L of deionised water was used for each 10 g of catalyst prepared. The filtrate (supernatant solution) was retained and analysed for Pt to ensure total ion exchange of the Pt. The catalyst was then dried overnight at 110°C.

Elemental analysis of the supernatant solutions of all ion exchanges was performed by a Fisons Horizon ICP-OES (Inductively Coupled Plasma-Optical Emission Spectrometer). This analysis revealed no traces of Pt left in any supernatant, confirming the hypothesis of complete uptake.

The Pt ion exchange performed can be represented non-stoichiometrically as shown in diagram:

$$NH_4^+ \text{ (zeolite)} + Pt(NH_3)_4^{2+} \text{ (aq)} \rightarrow Pt(NH_3)_4 \text{ (zeolite)} + NH_4^+ \text{ (aq)}$$

The ion exchange intended is not complete and some ammonium is left to provide the Brønsted acid site after calcination.

The catalysts prepared and tested are summarised in Table 1. The loadings are calculated with the hypothesis (confirmed) of complete Pt uptake.

Table 1. Example of platinum loadings (in wt %) of catalysts used

|  | 0% Pt | 0.5% Pt | 1% Pt |
|---|---|---|---|
| USY-1 | - | - | + |
| USY-2 | + | + | + |
| USY-3 | - | - | + |
| MOR | - | - | + |
| ASA | + | - | + |

In the above table, the character '+' indicates that the catalyst is active. The character '-' indicates that the catalyst is not active.

## Example 3 - catalyst activation procedure

This example illustrates the procedure for the activation of the catalysts from Example 2.

The catalysts with the tetra-ammine Pt complex adsorbed require activation to obtain the Pt metal (oxidation 0). The procedure has two steps: firstly calcination with $O_2$ or air (to obtain the oxidized form of the metal $Pt^{2+}$ and the H form of the zeolite) and secondly, reduction with $H_2$ (to obtain the reduced Pt metal form).

It has been shown in the literature that the heating rate of the first step has to be slow in order to avoid sintering and the procedure used is shown in Table 2.

Table 2: Calcination and reduction program for Pt loaded materials

| Sample Weight (g) | | 1.8 | | |
|---|---|---|---|---|
| Gas | Flow (mL/min) | Temp (°C) | Time/Ramp | Pressure |
| Air | 100 mL/min | 40-450 | 1 °C/min | Atm |
| Air | 100 mL/min | 450 | 240 min | Atm |
| Air | 100 mL/min | 450-40 | 2 °C/min | Atm |
| $N_2$ | 50 mL/min | 40 | 15 min | Atm |
| $H_2$ | 100 mL/min | 40-450 | 2 °C/min | Atm |
| $H_2$ | 100 mL/min | 450 | 240 min | Atm |
| $H_2$ | 100 mL/min | 450-40 | 2 °C/min | Atm |

## Example 4 - Preparation of a batch reactor (general)

This example illustrates how a batch reactor is prepared prior to commencing a batch recycling reaction. This example falls outside of the scope of the method of the invention. This example makes reference to Figure 1.

The waste plastics supply, catalyst and solvent (if necessary) are loaded into a clean autoclave. A gasket with copper greased applied is then put in place. The lid of the autoclave is then tightened with bolts in order to prevent leaks to a torque of about 70 Nm.

The reactor is then purged with $N_2$ to remove all of the air in the system. To purge the system, the valve V-N is fully opened and the valve V-G is opened in a controlled manner to gradually increase the pressure (as indicated by the gauge). When the pressure is above $1.379 \times 10^6$ Pa (gauge) (200 psig), V-G and V-N are closed and the content of the autoclave is vented in a controlled manner by opening V-V and V-G. This operation is repeated approximately three times to make sure the reactor has no air.

If the experiment is going to be under $N_2$, the reactor is pressurised to the desired pressure, Po, with $N_2$.

If $H_2$ is to be used, it is advisable to purge the system again with $N_2$ before pressurising to the desired pressure, Po, with $H_2$.

The amount of gas that is initially in the reactor is measured by connecting a gas meter to the sampling exit, SC, and opening the valve V-S to circulate the gas from the autoclave through the gas meter. When gas flow stops, V-S is closed and the reactor pressurised again up to Po. The reactor is then closed and the experiment ready to start.

**Example 5 - The reaction**

This example illustrates a batch procedure for performing the recycling reaction. This example falls outside of the scope of the method of the invention.

To start the reaction, firstly the stirrer is turned on. Then, the desired reaction temperature is set by using the temperature controller. In order to avoid the temperature overshooting, it is advisable not to set the temperature directly to the final value, but to increase the temperature in stages. When the final temperature is reached, it is held isothermal for the desired reaction time. After the reaction, the heater is switched off. During the experiment, it is important to monitor and record any changes associated with the stirrer, heater and pressure with time.

The reactor is then cooled by using compressed air and at a temperature where leaks are likely to occur, the gas contents of the reactor are sampled into a 1 L bomb placed in an ice-bath. This is done by connecting the sampling bomb to the sampling exit SC. The bomb is connected to a gas meter and the gas is circulated. During this time gas sampling bags can be used to collect samples for analysis. When gas sampling is complete, when no more gas is flowing, the gas meter is disconnected and the bomb sealed.

The remaining gas in the reactor is also measured with the gas meter and samples taken for analysis. The reactor is then turned upside down to collect the liquid and solid contents which can then be weighed and collected for analysis.

This scheme illustrates an example flow diagram for both preparing the reactor and performing the reaction according to Examples 1 and 2.

**Prepare reactor**
Clean reactor
Load reactor
Place Gasket
Close tightly
Connect Thermocouples
Place stirrer belt

**Purge with $N_2$**
Open V-N fully
Open V-G in a controlled manner
When $P \geq 1.379 \times 10^6$ Pa (gauge) (200 psig) close V-G and then V-N
Vent by opening V-V and V-G
Repeat 3 times

Experiment in $N_2$

Experiment in $H_2$

**Pressurise with $N_2$**
Open V-N fully
Open V-G in a controlled manner
When $P = P_0$ close V-G and then V-N
Vent by opening V-V and V-G

**Pressurise with $H_2$**
Open V-H fully
Open V-G in a controlled manner
When $P \geq 1.379 \times 10^6$ Pa (gauge) (200 psig) close V-G and then V-H
Vent by opening V-V and V-G
Repeat 3 times

**Pressurise with $H_2$**
Open V-H fully
Open V-G in a controlled manner
When $P = P_0$ close V-G and then V-H
Vent by opening V-V and V-G

Has gas volume already been measured enough times to get constant readings?

Yes

No

**Measure Gas Volume**
Connect Gas Meter to SC
Open V-S in a controlled manner
When no more flow, close V-S
Read Gas volume

Experiment in $N_2$

Experiment in $H_2$

Continue next page

14

**Heating Step**
Start Stirrer
Set reaction temperature (Set a lower temperature than desired and adjust manually until final temperature to avoid overshooting)
Monitor and record the increase of temperature with time

**Isothermal Step**
When the reaction temperature is reached, take t=0 and leave until the desired reaction time , say t= 5 mins
Record temperature and pressure with time

**Cooling Step**
When the reaction time is reached, switch off heater and cool with compressed air

**Bomb Sampling Step**
At a temperature when leaks may occur, sample the gas content of the reactor into the ice cooled sampling bomb via SC
Disconnect the sampling bomb from SC
Distil the gas and measure the amount of gas by connecting the bomb to the Gas Meter. Also collect gas bag samples
When no more gas is flowing, disconnect the Gas Meter and seal the bomb
Turn the bomb upside down and collect liquid sample

**Autoclave Sampling**
Connect Gas Meter to SC
Open V-S to circulate the gas and also collect gas bag samples
When no more gas is flowing, close V-S and open reactor
Remove reactor content with siphon

**Cleaning Autoclave**
Clean reactor with water and detergent and the solvent.
Dry carefully
Leave all valves closed

**Example 6 - Results**

This example illustrates the results for the catalytic hydrocracking of a number of compounds by a batch process according to examples 4 and 5. This example falls outside of the scope of the method of the invention. The catalyst numbers refer to those recited in Example 1 above.

| Compound | Catalyst | T/°C | P | Typical Conversion/% |
|---|---|---|---|---|
| n-Heptane | 215 | 270 | $5.516 \times 10^6$ Pa (800 psi) | 0.5 |
| n-Heptane | 215 | 310 | $5.516 \times 10^6$ Pa (800 psi) | 5.8 |
| n-Heptane | 215 | 350 | $5.516 \times 10^6$ Pa (800 psi) | 83.8 |
| n-Heptane | 215 | 380 | $5.516 \times 10^6$ Pa (800 psi) | 96.1 |
| Squalane | 211 | 350 | $5.516 \times 10^6$ Pa (800 psi) | 100.0 |
| PE | 215 | 310 | $5.516 \times 10^6$ Pa (800 psi) | 99.5 |
| PP | 215 | 310 | $5.516 \times 10^6$ Pa (800 psi) | 99.8 |
| PS | 215 | 310 | $5.516 \times 10^6$ Pa (800 psi) | 100.0 |
| PE (40%), PP (40%), PS (20%) | 215 | 310 | $5.516 \times 10^6$ Pa (800 psi) | 99.4 |
| PE (40%), PP (40%), PS (20%) | 211 | 310 | $5.516 \times 10^6$ Pa (800 psi) | 99.2 |
| PE (40%), PP (40%), PS (10%), PET (10%) | 211 | 410 | $5.516 \times 10^6$ Pa (800 psi) | 100.4 |
| PE (35%), PP (30%), PS (10%), PET (25%) | 211 | 400 | $5.516 \times 10^6$ Pa (800 psi) | 99.8 |
| PE (40%), PP (40%), PS (15%), PVC (5%) | 211 | 350 | $5.516 \times 10^6$ Pa (800 psi) | 99.4 |

**Example 7 - Typical Product Distribution**

This example illustrates the product distribution for the catalytic hydrocracking of a number of compounds following a process described in Examples 4 and 5. This example falls outside of the scope of the method of the invention. The catalyst numbers refer to those recited in example 1 above.

| Compound | Catalyst | T/°C | Distribution of lower alkyl compounds (the number corresponds to number of carbon atoms in alkyl compound) | | | | | | | | |
|---|---|---|---|---|---|---|---|---|---|---|---|
| | | | C1 | C2 | C3 | C4 | C5 | C6 | C7 | C8 | C9+ |
| n-Heptane | 215 | 270 | 0.0 | 0.0 | 0.0 | 0.0 | 0.0 | 0.5 | 99.5 | 0.0 | 0.0 |
| n-Heptane | 215 | 310 | 0.0 | 0.0 | 1.8 | 1.8 | 1.8 | 0.5 | 95.5 | 0.0 | 0.0 |
| n-Heptane | 215 | 350 | 0.1 | 0.1 | 31.8 | 49.6 | 1.4 | 1.0 | 16.2 | 0.0 | 0.0 |
| n-Heptane | 215 | 380 | 0.1 | 0.2 | 35.1 | 58.3 | 1.6 | 0.8 | 4.0 | 0.0 | 0.0 |
| Squalane | 211 | 350 | 0.1 | 0.3 | 8.7 | 16.5 | 28.5 | 41.1 | 2.1 | 1.9 | 1.0 |
| PE | 215 | 310 | 0.0 | 0.2 | 11.2 | 32.0 | 27.5 | 17.5 | 7.9 | 2.5 | 0.7 |
| PP | 215 | 310 | 0.1 | 0.1 | 7.7 | 23.6 | 15.2 | 33.4 | 13.1 | 5.7 | 1.1 |
| PS | 215 | 310 | 0.0 | 0.1 | 29.0 | 35.5 | 3.7 | 5.1 | 15.9 | 3.8 | 7.0 |
| PE (40%), PP (40%), PS (20%) | 215 | 310 | 0.1 | 0.2 | 5.5 | 12.6 | 10.2 | 31.0 | 25.3 | 10.0 | 4.6 |
| PE (40%), PP (40%), PS (20%) | 211 | 310 | 0.0 | 0.1 | 2.6 | 7.3 | 8.5 | 30.6 | 25.9 | 15.0 | 9.3 |
| PE (40%), PP (40%), PS (10%), PET (10%) | 211 | 410 | 0.4 | 1.1 | 7.9 | 7.7 | 6.9 | 30.9 | 21.4 | 10.4 | 13.8 |
| PE (35%), PP (30%), PS (10%), PET (25%) | 211 | 400 | 0.4 | 1.2 | 5.8 | 5.6 | 5.1 | 31.4 | 18.7 | 13.3 | 18.3 |

(continued)

| Compound | Catalyst | T/°C | Distribution of lower alkyl compounds (the number corresponds to number of carbon atoms in alkyl compound) | | | | | | | | |
|---|---|---|---|---|---|---|---|---|---|---|---|
| | | | C1 | C2 | C3 | C4 | C5 | C6 | C7 | C8 | C9+ |
| PE (40%), PP (40%), PS (15%), PVC (5%) | 211 | 350 | 0.1 | 0.5 | 6.8 | 8.5 | 6.9 | 29.0 | 25.5 | 12.9 | 9.2 |

Examples 4 to 7 are intended to demonstrate the applicability of the hydrocracking process to the recycling of waste plastics feedstocks utilising a catalyst described in Examples 1 to 3.

## Example 8 - Continuous recycling process

Waste plastics feedstock, previously prepared by a process such as chipping, is continuously introduced into a chip feed extruder where it is blended with a proportion of partially cracked feedstock, or other viscosity modifier, to facilitate its introduction into a blending chamber. In the blending chamber, the waste plastics feedstock is heated and mixed with a further portion of partially cracked feedstock, or other viscosity modifier. Fumes generated during the blending process are conducted to a HCl stripper column.

The molten mixture of waste plastics feedstock and viscosity modifier is pressurised and transferred to a de-chlorination reaction chamber by a positive displacement pump. A further portion of a viscosity modifier is added to the dechlorination reaction chamber to facilitate the reaction. In the de-chlorination reaction chamber the temperature of the melt is raised to achieve de-chlorination. In order to suppress undesirable side reactions, a hydrogen over pressure is arranged by bleeding excess hydrogen from the hydrocracking reaction loop. HCl arising from the de-chlorination is continuously discharged from the de-chlorination reaction chamber into the HCl stripper. In the HCl stripper, HCl is removed from the gases arising from both the blending chamber and the dechlorination reaction chamber. The HCl is discharged from the process as a co-product grade material.

The dechlorinated waste plastics melt is pressurised and transferred to a hydrocracking reaction chamber. Prior to entry into the hydrocracking reaction chamber the plastics melt is blended with a foam comprising hydrogen gas mixture and a high solids slurry comprising: partially cracked feedstock; fillers; and, a catalyst. The resultant mixture enters the hydrocracking reaction chamber, wherein its temperature is raised to the preferred range. As the reaction proceeds hydrogen is consumed and a distribution of products formed.

Volatile components including unreacted hydrogen exit through the top of the reactor and enter a cooler designed to condense vapours of $C_3$, and heavier, hydrocarbons. The non-condensible components, typically hydrogen, methane and ethane, are recycled round the hydrocracking reaction loop via a boost compressor. Additionally, make-up hydrogen is added at the suction of the boost compressor. Excess non-condensible hydrocarbons are purged from the hydrocracking reaction loop to provide the hydrogen over-pressure in the de-chlorinator. Hydrocracked and partially hydrocracked products exit from the bottom of the hydrocracking reaction chamber, and are passed to a separation system from which the end products can be derived. The end products include: a partially cracked feedstock which is recycled as a viscosity modifier; and a slurry containing fillers and catalyst, which is recycled to the hydrocracking reaction chamber.

## Example 9 - Reactive Extrusion Trial Experiments

This example illustrates a trial experiment to check the feasibility of using a screw feeder for the continuous hydrocracking of plastics using polyethylene and polystyrene as model polymers. The reaction temperature was varied between 180 °C and 375 °C and the experiments carried out at atmospheric pressure.

### Apparatus set up and general process

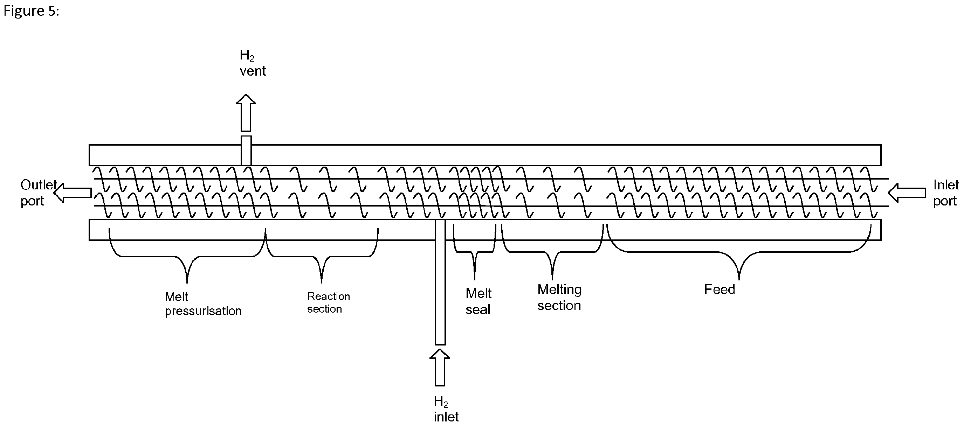

The configuration of the screw feeder is shown in figure 5. As illustrated in figure 5, the extruder comprises a number of individual screw elements which are mounted on a hexagonal drive shaft (hexagonal driveshaft not shown in the figure). It is possible to rearrange the apparatus to change processing parameters.

The process was conducted as follows:

Powdered polymer was fed into the inlet port of the extruder by a variable speed single screw feeder at a constant rate of 50 - 80 g/h. It was found that the mass flow in the extruder must have a minimum value for effective sealing in the region of 50g/h and maximum feed rates of the powder polymer in the region of 100g/h. The extruder screw speed can be varied independently of the mass flow rate. This reduced overall residence times, but not linearly at these feed rates, meaning that specific energy input and rate of surface renewal rises with screw speed.

The polymer powder was conveyed by the co-rotating screw through the feed section to the first set of kneading blocks in the melting section where melting is completed by mechanical deformation.

In the melt sealing section a pressurised region of melt was created to block the flow of hydrogen (introduced via the hydrogen inlet) towards the inlet port. The temperature in the melt seal zone can be held substantially below the reaction section (e.g. 200 °C in the seal and 300 °C in the reaction zone) to prevent pre-initiation and get better sealing through raised melt viscosity.

Hydrogen was injected via the side feed port to a section of feed screw in between the melt seal section and the reaction section. Since the conveying capacity of this section is very much greater than mass flow no polymer builds up in the port.

A reaction section comprising two sets of kneading blocks enables the melt to be intensively sheared and elongated. The back pressure of the reaction section means that the injection and initial portion of the reaction zone can be held at a higher pressure than the vent section.

The hydrogen and reaction gases are vented via the output port into a system of collection pipe work comprising a manometer and a needle valve flow restrictor (not shown in figure 5). As with the hydrogen injection zone no melt can escape due to the massive degree of screw starve feeding. A cold trap is used to capture any liquid products for analysis.

The last section enables melt to be pressurised in this case for the spaghetti die.

Operating Considerations at High Pressure

Start sequence:

To pressurize the barrel it is necessary to build a melt seal upstream of the vent port which means feeding polymer into the extruder with the screws running: thus, it is first necessary to purge the bomb and extruder; then start extruder screws; then start feeder on virgin polymer (feeder holds about 20g); then build a melt seal; then purge with hydrogen; then build hydrogen over-pressure; and finally, when the feeder is nearly empty, add catalyst coated granulate of the polymer.

Stop sequence:

When test material has run through, it is necessary to shut-down the apparatus which is done by: adding more virgin polymer to the feeder; then removing the hydrogen over-pressure; then purging the apparatus with hydrogen; then stopping the extruder feed; run out excess polymer; and finally stop screws.

Hydrocracking Experiments

In order to check the performance of the screw feeder, four blank experiments were carried with the same screw speed (90 rpm) using PS in the presence of Ar and $H_2$ at 1 atm, 250 °C and 300 °C. The plastic output was almost constant with a slight variation around an average value of 80 g/h, which shows that the screw feeder operates under reproducible conditions. Thereafter, a series of experiments were performed using PS and PE with catalyst at various temperatures ranging from 180 - 375 °C.

In experiments using Ecat and USY, 2 g of catalyst was mixed with 100 g of polymer and for Pt-USY, 1 g of catalyst was mixed with 100 g of polymer. Both plastic and catalyst were then intimately mixed and loaded into the hopper and the temperature zones were adjusted to the desired values. $H_2$ was then introduced at reaction zone at a rate of 100 mL/min and the screw motor was switched on. The system was allowed to run for 15 mins to reach steady state, while the mass flow rate was determined and adjusted to the desired value of 80 g/h during this time. The products leaving the reactor were separated into gaseous and condensed liquid products by means of an ice trap with the gas being collected in a gas bag. Products samples were collected over a period of 10 mins. The solid mixture of unreacted polymer and catalyst was extruded and passed to the pelletiser where chips of plastic-catalyst mixture were produced.

The gas products were analysed in a Varian 3400 GC equipped with a Plot alumina column and the liquid samples were analysed in a Varian 3400 GC equipped with a PONA column. The unreacted polymer/catalyst were analysed by differential scanning calorimetry (DSC) and by molecular weight distribution measurement using the Gel Permeation Chromatography.

Results and Discussion

A summary of the gas analysis for the experiments carried out is shown in Table 3.

Table 3: Summary of Reaction

| Reaction mixture | Cat/PE | T/°C | % gas in $H_2$ | %Conv. (estimated) |
|---|---|---|---|---|
| Ecat/PE | 1/50 | 375 | 4.1 | 17.6 |
| Ecat/PE | 1/10 | 375 | 13.5 | 58.0 |
| USY/PE | 1/50 | 300 | 2.3 | 9.9 |
| USY-PE | 1/50 | 375 | 9.2 | 17.3 |
| 1% PtUSY/PE | 1/100 | 210 | 1.5 | 2.8 |
| 1% PtUSY/PE | 1/100 | 240 | 0.9 | 1.6 |
| 1% PtUSY/PE | 1/100 | 270 | 0.9 | 1.6 |
| 1% PtUSY/PE | 1/100 | 300 | 2.3 | 4.3 |
| 1% PtUSY-PE | 1/100 | 310 | 2.3 | 4.4 |
| 1% PtUSY-PE | 1/100 | 330 | 2.3 | 4.3 |
| 1% PtUSY-PE | 1/100 | 350 | 3.0 | 5.7 |
| 1% PtUSY-PE | 1/100 | 375 | 4.0 | 7.6 |

The results show a trend in the products obtained. For example, more condensed liquid is obtained with Ecat at 375 °C, than with USY according to Table 3.

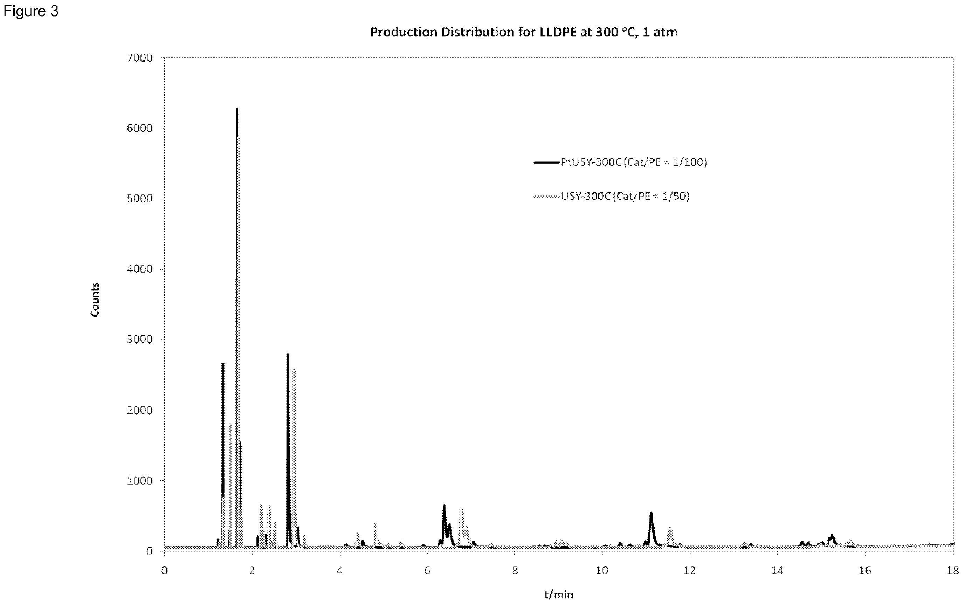

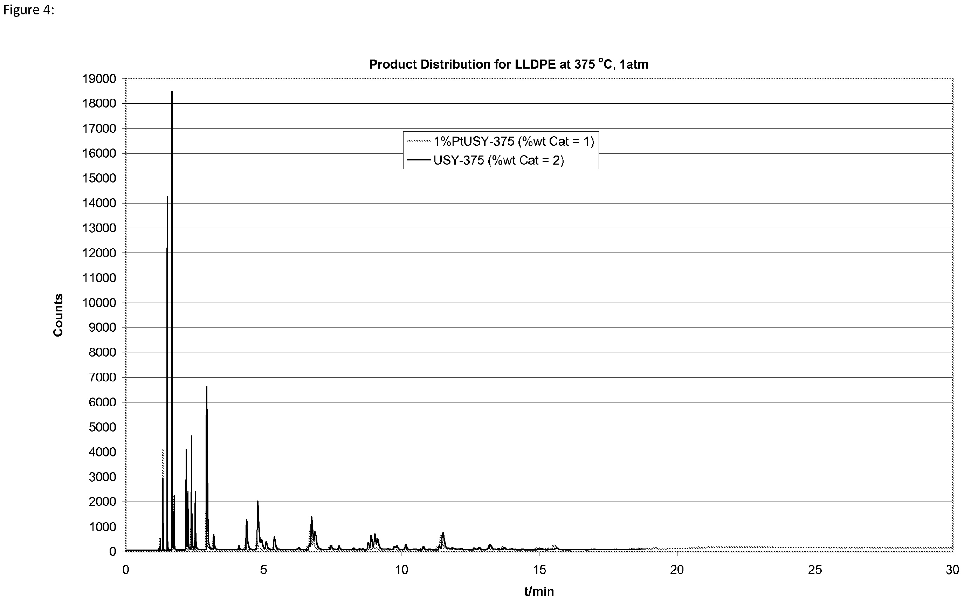

The GC traces in Fig 3 and 4 also show the evolution of peaks for USY and Pt-USY at 300 and 375 °C.

**Claims**

1.  A continuous process for recycling a waste plastics material, comprising:

    (i) continuously introducing into a reactor a waste plastics material as a feedstock, wherein the waste plastics material contains chlorinated plastics, wherein the reactor comprises at least one reaction chamber;
    (ii) introducing the feedstock and hydrogen gas into a dechlorination reaction chamber and maintaining the dechlorination reaction chamber at a temperature ($T^1$) of from 50 to 300°C and a pressure ($P^1$) of up to $1 \times 10^7$ Pa (absolute) (100 bar (absolute)); recovering HCl from the dechlorination reaction chamber; and separately recovering dechlorinated feedstock from the dechlorination reaction chamber;
    (iii) introducing the dechlorinated feedstock from step (ii) and hydrogen into a hydrocracking reaction chamber and maintaining the hydrocracking reaction chamber at a temperature ($T^2$) of from 50°C to 500°C and a pressure ($P^2$) less than about $2 \times 10^7$ Pa (absolute) (about 200 bar (absolute)) and contacting the feedstock with a zeolite, silica/alumina or alumina catalyst; and
    (iv) recovering hydrocracked feedstock from the hydrocracking reaction chamber;
    (v) optionally reintroducing non-hydrocracked or partially hydrocracked feedstock from the hydrocracking reaction chamber into the hydrocracking reactor chamber.

2.  The process of claim 1, wherein the waste plastics material comprises a mixture of two or more waste plastics materials selected from the group: polyethylene (PE), polypropylene (PP), polystyrene (PS), polyethylene terephthalate (PET), polychloroprene, nylon, polyvinyl chloride (PVC), polyacrylonitrile (PAN), or polyurethane (PU).

3.  The process of claim 1 or claim 2, wherein the waste plastics material is processed prior to introduction into the reactor.

4.  The process of any of claims 1 to 3, wherein after the waste plastics material has been introduced into the reactor and before the feedstock is introduced into the dechlorination reaction chamber the feedstock is first introduced into a blending chamber; optionally

wherein the blending chamber employs heat to melt the feedstock.

5. The process of claim 4, wherein the waste plastics feedstock is mixed with a viscosity modifying agent in the blending chamber; optionally wherein the viscosity modifying agent has a vapour pressure which is lower than 20% of the pressure of the reactor (or individual chambers of the reactor); optionally the viscosity modifying agents have a vapour pressure less than 1% of atmospheric pressure at the temperature of the blending chamber; and further optionally wherein the viscosity modifying agent comprises or consists of partially cracked material obtained as a product of the process.

6. The process of any of claim 1 to 5, wherein the dechlorination reaction chamber is pressurised with hydrogen gas to a pressure ($P^1$) of from about $3.5 \times 10^6$ to about $6 \times 10^6$ Pa (absolute) 35 to 60 bar (absolute)).

7. The process of claims 1 to 6, wherein the dechlorination reaction chamber is heated to a temperature, $T^1$, of from 190 to 210 °C.

8. The process of any of claims 1 to 7, wherein the hydrocracking reaction chamber is pressurised with hydrogen gas to a pressure of from $3.5 \times 10^6$ to $6 \times 10^6$ Pa (absolute) 35 to 60 bar (absolute)).

9. The process of any of claims 1 to 8, wherein the hydrocracking reaction chamber is heated to a temperature, $T^2$, of 220°C.

10. The process of any of claims 1 to 9, wherein the catalyst is a zeolite catalyst.

11. The process of any of claims 1 to 10, wherein the light hydrocarbons obtained from the hydrocracking reaction and excess $H_2$ are reintroduced into the dechlorination reaction chamber to act as a hydrogen source for the dechlorination reaction; and/or wherein the partially cracked viscosity modifying agents are reintroduced into the blending, dechlorination chamber and/or hydrocracking chamber; and/or. wherein the component which is high in solids is reintroduced into the hydrocracking reaction chamber along with dechlorinated feedstock from the dechlorination reaction chamber.

12. The process of any of claims 1 to 11, wherein the apparatus employed in the process of the present invention is purged with an inert gas prior to starting the reaction process.

13. An apparatus for a continuous process for recycling a waste plastics material, comprising:

> i) a dechlorination reaction chamber;
> ii) a means to transport a waste plastics material feedstock into the dechlorination reaction chamber;
> iii) a means for stripping HCl from the gases arising from the dechlorination reaction chamber;
> iv) means for introducing hydrogen gas into the dechlorination reaction chamber;
> v) a hydrocracking reaction chamber;
> vi) a means to transport dechlorinated feedstock from the dechlorination reaction chamber to the hydrocracking reaction chamber; and
> vii) means for introducing hydrogen gas into the hydrocracking reaction chamber.

**Patentansprüche**

1. Kontinuierliches Verfahren zum Recyceln eines Kunststoffabfallmaterials, das Folgendes umfasst:

> (i) kontinuierliches Einführen eines Kunststoffabfallmaterials als Einsatzmaterial in einen Reaktor, wobei das Kunststoffabfallmaterial chlorierten Kunststoff enthält, wobei der Reaktor mindestens eine Reaktionskammer umfasst;
> (ii) Einführen des Einsatzmaterials und von Wasserstoffgas in eine Dechlorierungsreaktionskammer und Halten der Dechlorierungsreaktionskammer bei einer Temperatur ($T^1$) von 50 bis 300 °C und bei einem Druck ($P^1$) von bis zu
> $1 \times 10^7$ Pa (absolut) 100 bar (absolut)); Rückgewinnen von HCl aus der Dechlorierungsreaktionskammer; und separates Rückgewinnen von dechloriertem Einsatzmaterial aus der Dechlorierungsreaktionskammer;
> (iii) Einführen des dechlorierten Einsatzmaterials aus Schritt (ii) und Wasserstoff in eine Hydrocrackingreaktionskammer und Halten der Hydrocrackingreaktionskammer bei einer Temperatur (T$^2$) von 50 °C bis 500 °C und bei einem Druck (P$^2$) von weniger als etwa 2x10$^7$ Pa (absolut) (etwa 200 bar (absolut)) und Kontaktieren des Einsatzmaterials mit einem Zeolith-, einem Siliziumdioxid/Aluminium- oder einem Aluminiumkatalysatoren; und

(iv) Rückgewinnen von hydrogecracktem Einsatzmaterial aus der Hydrocrackingreaktionskammer;

(v) wahlweises Wiedereinführen von nicht-hydrogecracktem oder teilweise hydrogecracktem Einsatzmaterial aus der Hydrocrackingreaktionskammer in die Hydrocrackingreaktionskammer.

2. Verfahren nach Anspruch 1, wobei das Kunststoffabfallmaterial eine Mischung zwei oder mehr Kunststoffabfallmaterialien umfasst, die aus folgender Gruppe ausgewählt sind: Polyethylen (PE), Polypropylen (PP), Polystyrol (PS), Polyethylenterephtalat (PET), Polychloropren, Nylon, Polyvinylchlorid (PVC), Polyacrylnitril (PAN) oder Polyurethan (PU).

3. Verfahren nach Anspruch 1 oder Anspruch 2, wobei das Kunststoffabfallmaterial vor der Einführung in den Reaktor behandelt wird.

4. Verfahren nach einem der Ansprüche 1 bis 3, wobei zuerst das Einsatzmaterial in eine Mischkammer eingeführt wird, nachdem das Kunststoffabfallmaterial in den Reaktor eingeführt wurde und bevor das Einsatzmaterial in die Dechlorierungsreaktionskammer eingeführt wird; wobei wahlweise die Mischkammer Hitze zum Schmelzen des Einsatzmaterials einsetzt.

5. Verfahren nach Anspruch 4, wobei das Kunststoffabfallmaterial mit einem viskositätsmodifizierendem Mittel in der Mischkammer gemischt wird; wobei
wahlweise das viskositätsmodifizierende Mittel einen Dampfdruck aufweist, der weniger als 20 % des Drucks des Reaktors (oder der einzelnen Kammern des Reaktors) beträgt; wobei wahlweise die viskositätsmodifizierenden Mittel einen Dampfdruck von weniger als 1 % des Atmosphärendrucks bei der Temperatur der Mischkammer aufweisen; und wobei ferner wahlweise das viskositätsmodifizierende Mittel teilweise gecracktes Material, das als Produkt des Verfahrens erhalten wurde, umfasst oder daraus besteht.

6. Verfahren nach einem der Ansprüche 1 bis 5, wobei die Dechlorierungsreaktionskammer mit Wasserstoffgas bis zu einem Druck (P$^1$) von etwa 3,5x10$^6$ bis etwa 6x10$^6$ Pa (absolut) 35 bis 60 bar (absolut)) unter Druck gesetzt wird.

7. Verfahren nach den Ansprüchen 1 bis 6, wobei die Dechlorierungsreaktionskammer bis zu einer Temperatur, T$^1$, von 190 bis 210 °C erhitzt wird.

8. Verfahren nach einem der Ansprüche 1 bis 7, wobei die Hydrocrackingreaktionskammer mit Wasserstoffgas bis zu einem Druck von 3,5x10$^6$ bis 6x10$^6$ Pa (absolut) 35 bis 60 bar (absolut)) unter Druck gesetzt wird.

9. Verfahren nach einem der Ansprüche 1 bis 8, wobei die Hydrocrackingreaktionskammer bis zu einer Temperatur, T$^2$, von 220°C erhitzt wird.

10. Verfahren nach einem der Ansprüche 1 bis 9, wobei der Katalysator ein Zeolith-Katalysator ist.

11. Verfahren nach einem der Ansprüche 1 bis 10, wobei aus der Hydrocrackingreaktionskammer erhaltene leichte Kohlenwasserstoffe und überschüssiges H$_2$ wieder in die Dechlorierungsreaktionskammer eingeführt werden, um als Wasserstoffquelle für die Dechlorierungsreaktion zu dienen; und/oder wobei die teilweise gecrackten viskositätsmodifizierenden Mittel wieder in die Misch-, die Dechlorierungskammer und/oder die Hydrocrackingkammer eingeführt werden; und/oder. wobei die Komponente, die einen hohen Anteil an Feststoffen besitzt, zusammen mit dechloriertem Einsatzmaterial aus der Dechlorierungsreaktionskammer wieder in die Hydrocrackingreaktionskammer eingeführt wird.

12. Verfahren nach einem der Ansprüche 1 bis 11, wobei die in dem Verfahren der vorliegenden Erfindung eingesetzte Vorrichtung mit einem inerten Gas vor Beginn des Reaktionsverfahrens gespült wird.

13. Vorrichtung für ein kontinuierliches Verfahren zum Recyceln eines Kunststoffabfallmaterials, das Folgendes umfasst:

i) eine Dechlorierungsreaktionskammer;
ii) ein Mittel zum Transportieren eines Kunststoffabfallmaterialeinsatzmaterials in eine Dechlorierungsreaktionskammer;

iii) ein Mittel zum Abziehen von HCl aus den Gasen, die in der Dechlorierungsreaktionskammer entstehen;

iv) Mittel zum Einführen von Wasserstoffgas in die Dechlorierungsreaktionskammer;

v) eine Hydrocrackingreaktionskammer;

vi) ein Mittel zum Transportieren von dechloriertem Einsatzmaterial aus der Dechlorierungsreaktionskammer zur Hydrocrackingreaktionskammer; und

vii) Mittel zum Einführen von Wasserstoffgas in die Hydrocrackingreaktionskammer.

## Revendications

1.  Procédé continu pour recycler un déchet de matière plastique, comprenant :

    (i) l'introduction en continu dans un réacteur d'un déchet de matière plastique comme charge d'alimentation, le déchet de matière plastique contenant des plastiques chlorés, le réacteur comprenant au moins une chambre de réaction ;

    (ii) l'introduction de la charge d'alimentation et d'hydrogène gazeux dans une chambre de réaction de déchloration et le maintien de la chambre de réaction de déchloration à une température ($T^1$) de 50 à 300°C et à une pression ($P^1$) allant jusqu'à $1 \times 10^7$ Pa (absolue) (100 bar (absolue)) ; la récupération du HCl de la chambre de réaction de déchloration ; et la récupération séparée de la charge d'alimentation déchlorée de la chambre de réaction de déchloration ;

    (iii) l'introduction de la charge d'alimentation déchlorée de l'étape (ii) et d'hydrogène dans une chambre de réaction d'hydrocraquage et le maintien de la chambre de réaction d'hydrocraquage à une température ($T^2$) de 50°C à 500°C et à une pression ($P^2$) inférieure à environ $2 \times 10^7$ Pa (absolue) (environ 200 bar (absolue)) et la mise en contact de la charge d'alimentation avec un catalyseur zéolitique, de silice/alumine ou d'alumine ; et

    (iv) la récupération de la charge d'alimentation hydrocraquée de la chambre de réaction d'hydrocraquage ;

    (v) la réintroduction facultative de la charge d'alimentation non hydrocraquée ou partiellement hydrocraquée de la chambre de réaction d'hydrocraquage dans la chambre du réacteur d'hydrocraquage.

2.  Procédé selon la revendication 1, dans lequel le déchet de matière plastique comprend un mélange d'au moins deux matières plastiques sélectionnées dans le groupe : polyéthylène (PE), polypropylène (PP), polystyrène (PS), polyéthylène téréphtalate (PET), polychloroprène, nylon, chlorure de polyvinyle (PVC), polyacrylonitrile (PAN) ou polyuréthane (PU).

3.  Procédé selon la revendication 1 ou la revendication 2, dans lequel le déchet de matière plastique est traité avant son introduction dans le réacteur.

4.  Procédé selon l'une quelconque des revendications 1 à 3, dans lequel, après que le déchet de matière plastique a été introduit dans le réacteur et avant que la charge d'alimentation soit introduite dans la chambre de réaction de déchloration, la charge d'alimentation est d'abord introduite dans une chambre de mélange, la chambre de mélange employant facultativement de la chaleur pour faire fondre la charge d'alimentation.

5.  Procédé selon la revendication 4, dans lequel la charge d'alimentation en déchet de plastique est mélangée à un agent modificateur de viscosité dans la chambre de mélange ; l'agent modificateur de viscosité ayant facultativement une pression de vapeur qui est inférieure à 20 % de la pression du réacteur (ou des chambres individuelles du réacteur); les agents modificateurs de viscosité ayant facultativement une pression de vapeur inférieure à 1% de la pression atmosphérique à la température de la chambre de mélange ; et l'agent modificateur de viscosité comprenant ou étant constitué en outre facultativement de matériau de craquage partiel obtenu comme produit du procédé.

6.  Procédé selon l'une quelconque des revendications 1 à 5, dans lequel la chambre de réaction de déchloration est pressurisée avec de l'hydrogène gazeux à une pression ($P^1$) d'environ $3,5 \times 10^6$ à environ $6 \times 10^6$ Pa (absolue) (35 à 60 bar (absolue)).

7.  Procédé selon les revendications 1 à 6, dans lequel la chambre de réaction de déchloration est chauffée à une température $T^1$ de 190 à 210 °C.

8.  Procédé selon l'une quelconque des revendications 1 à 7, dans lequel la chambre de réaction d'hydrocraquage est pressurisée avec de l'hydrogène gazeux à une pression de $3,5 \times 10^6$ à $6 \times 10^6$ Pa (absolue) (35 à 60 bar (absolue)).

9. Procédé selon l'une quelconque des revendications 1 à 8, dans lequel la chambre de réaction d'hydrocraquage est chauffée à une température $T^2$ de 220°C.

10. Procédé selon l'une quelconque des revendications 1 à 9, dans lequel le catalyseur est un catalyseur zéolitique.

11. Procédé selon l'une quelconque des revendications 1 à 10, dans lequel les hydrocarbures légers obtenus de la réaction d'hydrocraquage et le $H_2$ excédentaire sont réintroduits dans la chambre de réaction de déchloration pour servir de source d'hydrogène pour la réaction de déchloration ; et/ou dans lequel les agents modificateurs de viscosité de craquage partiel sont réintroduits dans la chambre de mélange, de déchloration et/ou la chambre d'hydrocraquage ; et/ou dans lequel le composant qui a une haute teneur en solides est réintroduit dans la chambre de réaction d'hydrocraquage avec la charge d'alimentation déchlorée provenant de la chambre de réaction de déchloration.

12. Procédé selon l'une quelconque des revendications 1 à 11, dans lequel l'appareil employé dans le procédé de la présente invention est purgé avec un gaz inerte avant le début du procédé de réaction.

13. Appareil pour un procédé continu de recyclage d'un déchet de matière plastique, comprenant:

i) une chambre de réaction de déchloration ;
ii) un moyen pour transporter la charge d'alimentation en déchet de matière plastique dans la chambre de réaction de déchloration ;
iii) un moyen pour éliminer le HCl des gaz provenant de la chambre de réaction de déchloration ;
iv) un moyen pour introduire de l'hydrogène gazeux dans la chambre de réaction de déchloration ;
v) une chambre de réaction d'hydrocraquage ;
vi) un moyen pour transporter la charge d'alimentation déchlorée de la chambre de réaction de déchloration à la chambre de réaction d'hydrocraquage ; et
vii) un moyen pour introduire de l'hydrogène gazeux dans la chambre de réaction d'hydrocraquage.

Figure 1:

Figure 2:

Figure 3

Figure 4:

Product Distribution for LLDPE at 375 °C, 1atm

Figure 5:

Inlet port

Outlet port

$H_2$ vent

$H_2$ inlet

Feed

Melting section

Melt seal

Reaction section

Melt pressurisation

**EP 2 649 121 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6171475 B
- CA 2202941

- GB 2010050932 W